# EUROPEAN PATENT APPLICATION

(11) **EP 2 133 003 A2**
(43) Date of publication of application: **16.12.2009**
(21) Application number: 09162342.1
(22) Date of filing: 10.06.2009
(51) Int. Cl.: A45C 9/00, A45C 5/14

(54) **Foldable-chair-equipped bag**

(30) Priority: 11.06.2008 JP 2008153592
(71) Applicant: Swany Corporation, Higashikagawa-shi, Kagawa (JP)
(72) Inventor: Mao, Chen Shou, Taichia Taichung (TW)
(74) Representative: Intes, Didier Gérard André

(57) **Abstract**

A bag includes support pipes 5 coupled to a base 1, a seat 31 coupled to the pipes 5, seat stoppers 37, foldable legs 32 coupled to the seat 31, a first link 33 having one end coupled to the middle of the legs 32 and another end coupled to the seat 31, and second links 34 each of which having one end coupled to the middle of the leg 32 and another end coupled to the base 1. The seat 31 can be folded in the vertical orientation. The seat 31 can be held in the horizontal orientation by the first link 33 and the legs 32. The first and second links 33 and 34 are coupled by elastic rods 39. When the second links 34 swing, the rods 39 move the one end of the first link 33 along the seat 31.

## Description

### BACKGROUND OF THE INVENTION

### 1. Field of the Invention

The present invention relates to a foldable-chair-equipped bag, and in particular to a foldable-chair-equipped bag including a foldable chair that can be easily folded/unfolded and is convenient for users to use.

### 2. Description of the Related Art

A foldable-chair-equipped bag has been developed (see Japanese Patent Laid-Open Publication No. JP 2004-344355A). As shown in Figs. 1 and 2, a foldable seat 91 is coupled to the back surface of the bag, and the bag can be used as a chair 90 when the foldable seat 91 is infolded. Since the bag can be used as a chair, the bag is convenient for users when the users take a rest. However, this chair 90 has a disadvantage in that an effort is required to fold/unfold the chair 90. The reason is that, when unfolding the chair, the users are required to unfold the seat 91 and orientate the seat 91 in the horizontal direction, and are then required to unfold a foldable leg portion 92 and lock the seat 91 to hold the seat 91 in the horizontal orientation. Also, when folding the chair, the users are required to fold the foldable leg portion 92 and fold the seat 91 in parallel to support pipes 95.

The present invention has been developed for solving the aforementioned disadvantages. It is an important object to provide a foldable-chair-equipped bag that includes a simply configured chair that can be simply and easily folded/unfolded by users.

### SUMMARY OF THE INVENTION

A foldable-chair-equipped bag includes a horizontal base 1, a pair of support pipes 5, a seat 31, a seat stopper 37, a foldable chair 32, a first link 33 and a second link 34. Casters 6 are secured to the lower surface of the horizontal base 1 to allow the bag to be wheeled. A bag unit 3 is mounted on the horizontal base 1. The lower ends of the pair of support pipes 5 are coupled to the horizontal base 1. The seat 31 can be folded from the horizontal orientation to the vertical orientation, and is coupled to the support pipes 5 movably in the vertical direction. The seat stopper 37 restricts the downward movement of the seat 31. The upper end of the foldable legs 32 are coupled to the seat 31 so that the foldable legs 32 can swing. One end of the first link 33 is coupled to a middle part of the foldable leg 32. Another end of the first link 33 is coupled to the lower surface of the seat 31 movably toward and away from the support pipes 5. One end of the second link 34 is coupled to the middle part of the foldable leg 32. Another end of the second link 34 is coupled to the horizontal base 1 or a lower end part of the support pipe 5 so that the second link 34 can swing. The second link 34 restricts the inclination angle of the foldable legs 32. In this bag, when a coupling part 40 between the seat 31 and the support pipes 5 is moved upward, the seat 31, the foldable legs 32, the first link 33 and the second link 34 are brought in parallel to the support pipes 5 so that the seat 31 is folded. In addition, when the coupling part 40 between the seat 31 and the support pipes 5 is moved downward, and the seat 31 is unfolded toward the horizontal orientation, the seat stopper 37 stops the downward movement of the coupling part 40 coupled to the support pipes 5, and the foldable legs 32 are unfolded so that the another end of the first link 33 is moved away from the support pipes 5. Also, when the second link 34 restricts the inclination angle of the foldable legs 32, the seat 31 is held in the horizontal orientation by the first link 33 and the foldable legs 32. Also, the first link 33 and the second link 34 are coupled by an elastic rod 39 that does not provide an elastic force when the seat is folded. Also, the elastic force of the elastic rod 39 moves the another end of the first link 33 along the seat 31 via the second link 34 that swings with respect to the support pipes 5.

The above and further objects of the present invention as well as the features thereof will become more apparent from the following detailed description to be made in conjunction with the accompanying drawings.

### BRIEF DESCRIPTION OF THE DRAWINGS

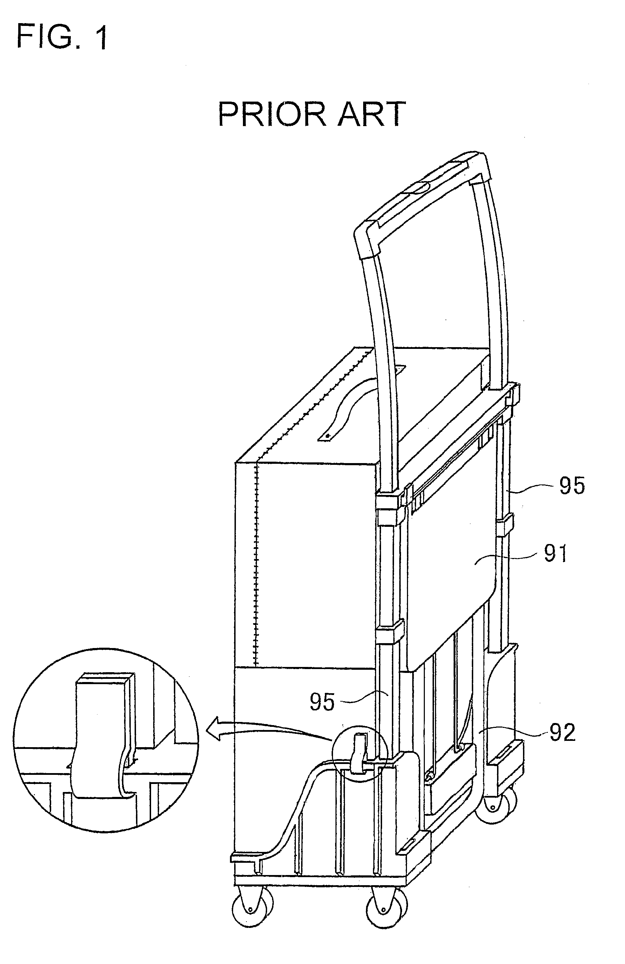

Fig. 1 is a perspective view showing a known foldable-chair-equipped bag;

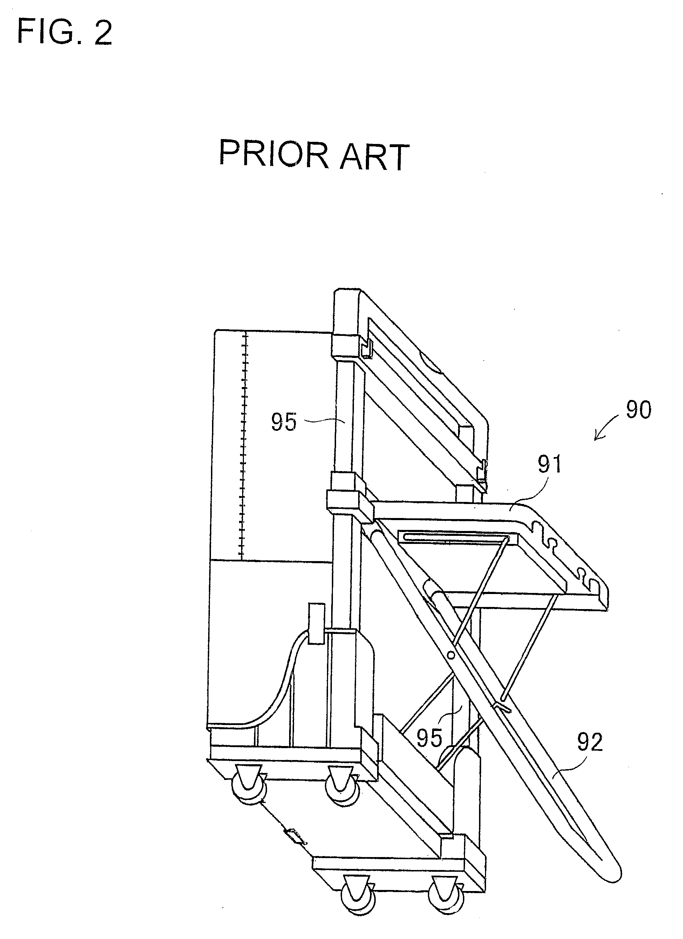

Fig. 2 is a perspective bottom view showing the foldable-chair-equipped bag shown in Fig. 1 with a foldable chair being unfolded;
Fig. 3 is a perspective view showing a foldable-chair-equipped bag according to an embodiment of the present invention;
Fig. 4 is a perspective view showing the foldable-chair-equipped bag shown in Fig. 3 with a foldable chair being unfolded;
Fig. 5 is a perspective bottom view of the bag shown in Fig. 4;
Fig. 6 is a side view of the bag shown in Fig. 4;
Fig. 7 is a side view showing the foldable chair of the bag shown in Fig. 3 when the foldable chair is unfolded;
Fig. 8 is a view schematically showing states when the foldable chair of the bag shown in Fig. 3 is unfolded;
Fig. 9 is a side view showing the foldable chair of the bag shown in Fig. 6 when the foldable chair is folded;
Fig. 10 is an enlarged sectional view showing the configuration of a support pipe stopper that is arranged in a support pipe;
Fig. 11 is an enlarged cross-sectional view showing the support pipe stopper of the support pipe shown in Fig. 10 in a released state;
Fig. 12 is an enlarged perspective view of an elastic rod;
Fig. 13 is a bottom view showing a seat with a locking mechanism being locked;
Fig. 14 is a perspective bottom view showing the inside configuration of the locking mechanism shown in Fig. 13;
Fig. 15 is a bottom view showing the seat with the locking mechanism being unlocked;
Fig. 16 is a perspective bottom view showing the inside configuration of the locking mechanism shown in Fig. 15;
Fig. 17 is a cross-sectional view of the seat taken along a line A-A shown in Fig. 13; and
Fig. 18 is an enlarged perspective view showing an interlocking portion of the locking mechanism in the seat stopper.

### DETAILED DESCRIPTION OF THE EMBODIMENT(S)

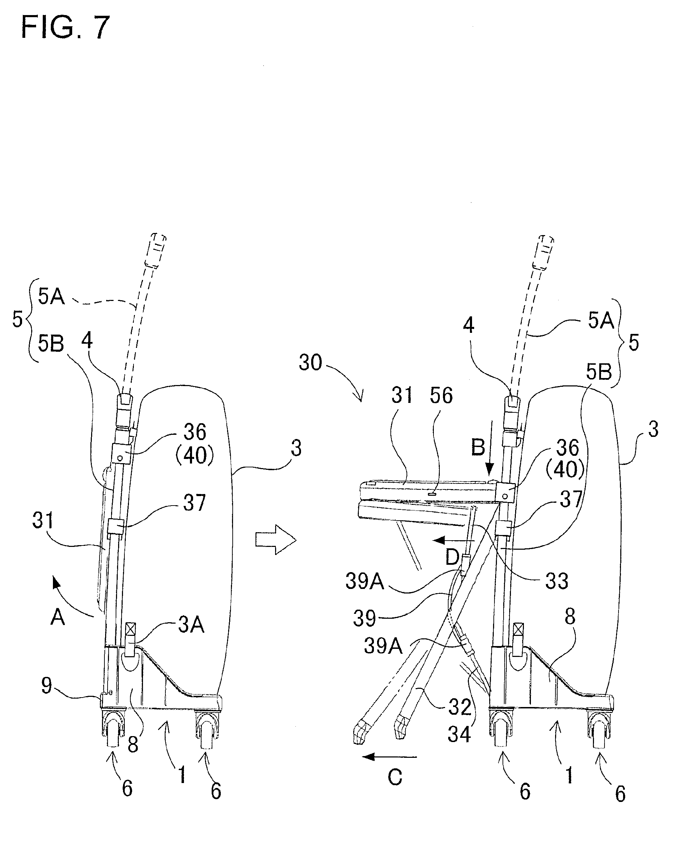

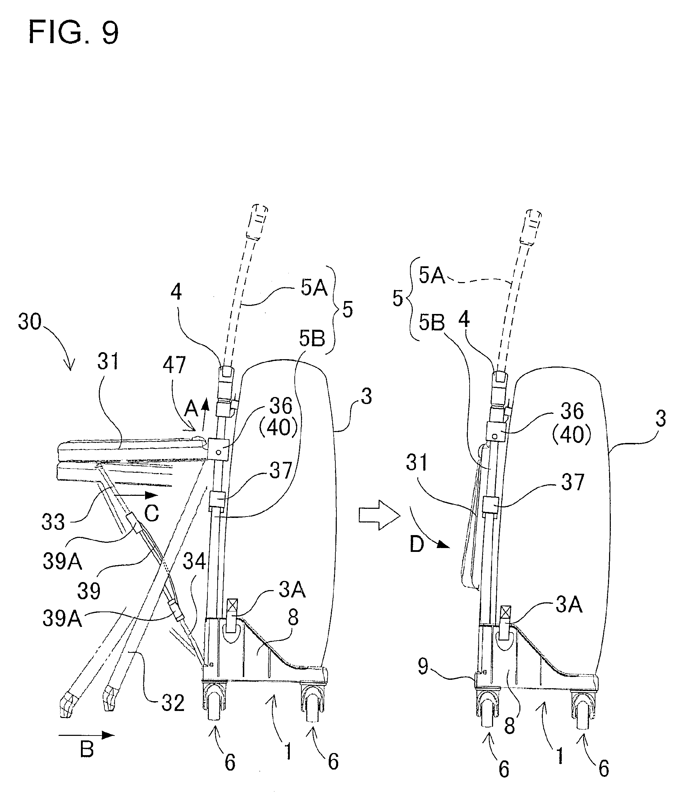

Fig. 7 shows a foldable chair of a bag when the foldable chair is unfolded. Fig. 9 shows the foldable chair when the foldable chair is folded. As shown in Fig. 7, when a seat 31 is unfolded from a folded orientation to the horizontal orientation, and the foldable legs 32 are unfolded, second links 34 swing so that ends of the second links 34 are moved away from support pipes 5. The swinging of the second links 34 makes elastic rods 39 to move coupling points of a first link 33 coupled to the seat 31 away from the support pipes 5 as shown by an arrow D in Fig. 7 by an elastic force of the elastic rods 39. The reason is that the elastic rods 39 that are coupled to the first link 33 and the second links 34 do not apply an elastic force to the first link 33 and the second links 34 in the folded orientation. When the first link is in the vertical orientation, and the second links are in an inclined orientation, the elastic rods are elastically deformed. The deformed elastic rods apply the elastic force to the first link to urge the coupling point of the first link coupled to the seat away from the support pipes. When the coupling points of the first link coupled to the seat are moved away from the support pipes, the first link swings to an orientation where the first link is supported by foldable legs and supports the lower surface of the seat. When the seat is unfolded, seat stoppers support a coupling side of the seat coupled to the support pipes, and the first link and the foldable legs support a free-end side of the seat away from the support pipes. Thus, the seat is held in the horizontal orientation. Also, as shown in Fig. 9, when the coupling side of the seat 31 coupled to the support pipes 5 is moved upward, and the seat 31 is folded toward the vertical orientation, the upper ends of the foldable legs 32 that are coupled to the seat 31 and the foldable legs 32 are moved upward and swing to the vertical orientation in parallel to the support pipes 5. When the foldable legs 32 swing toward the vertical orientation, the foldable legs 32 make the second links 34 to swing toward an orientation in parallel to the support pipes 5. Also, when the second links 34 swing toward this orientation, the second links 34 move the coupling points of the first link 33 coupled to the seat 31 toward the support pipes 5. Thus, the seat 31, the foldable legs 32, the second links 34 and the first link 33 are brought in the orientation parallel to the support pipe 5, and the foldable chair is folded compact on the back surface side of a bag unit.

In the foldable-chair-equipped bag, as stated above, when the seat is unfolded so that the chair is unfolded, the elastic rods swing the first link to the orientation where first link supports the seat. When the seat is closed so that the chair is folded, the elastic rods move the first link to the folded (vertical) orientation. The first link and the second links are configured very simply by coupling them by the elastic rods but allow users to simply, easily and quickly unfold the foldable chair and to quickly fold the foldable chair. Accordingly, the thus-configured first and second links are convenient for users to use the foldable chair.

In addition, a foldable-chair-equipped bag according to another aspect includes a locking mechanism 50 holds the seat 31 in the vertical orientation. The locking mechanism 50 includes a lock release button 51 that is located on a free-end side of the seat 31 and releases the holding of the seat 31 so that the seat 31 swings from the vertical orientation to the horizontal orientation.

In addition, in a foldable-chair-equipped bag according to another aspect, the locking mechanism 50 includes interlocking portions 52, elastically protruding portions 53, and a linkage mechanism 54. The interlocking portions 52 are arranged on the support pipes 5. The elastically protruding portions 53 are coupled to the lower surface of the seat 31 and elastically protrude toward an interlocking position to interlock with the interlocking portions 52. The linkage mechanism 54 couples the elastically protruding portions 53 to the lock release button 51 so that the elastically protruding portions 53 can be retracted from the interlocking position to an interlocking release position.
This bag has a feature in that users can operate the lock release button to unfold the seat so that the chair can be used and can hold the seat in the folded orientation by the locking mechanism.

In addition, in the foldable-chair-equipped bag according to another aspect, a vertical slider 36 is coupled to the support pipes 5 to be able to slide in the vertical direction, and the seat 31 and the foldable legs 32 are foldably coupled to the vertical slider 36.
This bag has a simple configuration but vertically movably and swingably couples the seat to the support pipes so that the foldable legs are swingably coupled to the seat.

In a foldable-chair-equipped bag according to another aspect, ends of the first link 33 are coupled to upper points of the foldable legs 32 relative to ends of the second links 34.
In this configuration, the first and second links can be simply coupled to the foldable legs not to intersect with each other.

In a foldable-chair-equipped bag according to another aspect, the elastic rods 39 are formed of hard plastic that can elastically deform.
In this configuration, the elastic rods can be inexpensively mass-produced so that the cost of the bag can be reduced.

In a foldable-chair-equipped bag according to another aspect, a grip 4 is secured to the upper ends of the support pipes 5.
In this configuration, the support pipes also serve as supports for the grip of the bag. Thus, users can grips the grip on the upper ends of the support pipes and wheel the bag on the casters. Also, the support pipes can serve as supports that support the seat when users use the chair.

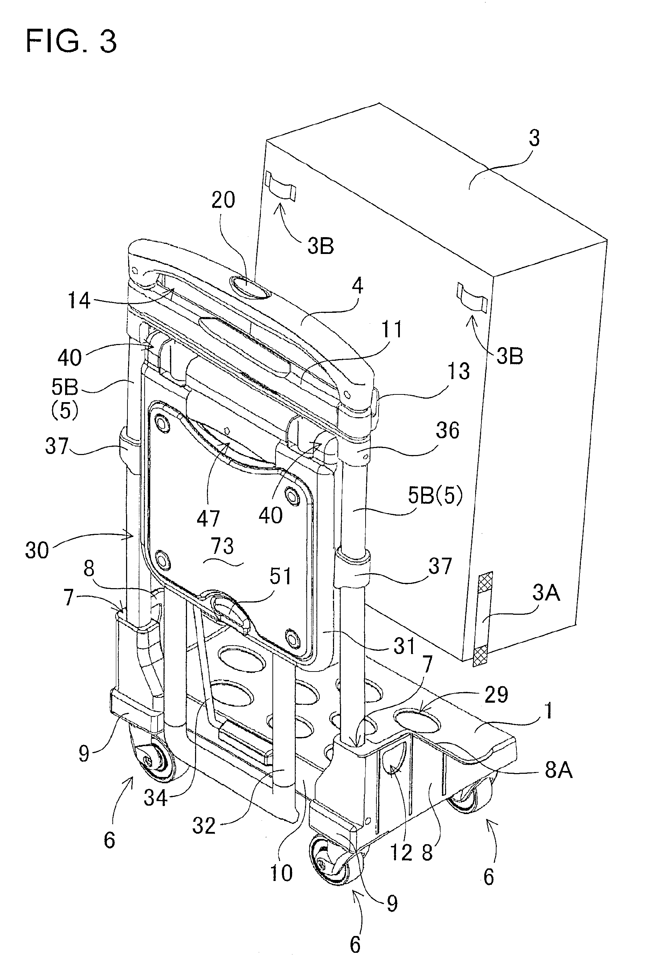

The following description will describe a foldable-chair-equipped bag with reference to the drawings. The foldable-chair-equipped bag shown in Figs. 3 through 9 includes a horizontal base 1, and a bag unit 3. Swivel casters 6 are arranged at four corners of the bottom of the horizontal base 1, and allow the bag to be wheeled in all directions. The bag unit 3 is mounted onto the horizontal base 1. In the illustrated bag, the bag unit 3 is detachably attached to the horizontal base 1. The bag has a feature that in that the bag unit 3 can be easily replaced. It should be appreciated that the bag unit may be non-detachably secured onto the horizontal base.

The horizontal base 1 is formed of plastic. The horizontal base 1 includes the casters 6 at its four corners, and the bag unit 3 on its upper surface. A pair of support pipes 5 are secured to back side of the horizontal base 1 to stand and extend upward. The support pipes 5 can be elongated in the vertical direction. A grip 4 is secured to the upper ends of the support pipes 5. The illustrated support pipes 5 are telescopic rods, and include support pipe stoppers 15 that hold the support pipes 5 at elongated and collapsed positions.

The entire shape of the horizontal base 1 is a quadrangle in plan view. In particular, in the illustrated horizontal base 1, its entire shape is a rectangle. The two support pipes 5 are secured on one of longer edges of the rectangular horizontal base 1. Reinforce walls 8 are disposed on shorter edges of the rectangular horizontal base 1. The reinforce walls 8 stand upright on the upper surface of the horizontal base 1. The height of the reinforce walls 8 gradually increases toward back side where the support pipes 5 are arranged. The support pipes 5 can be more strongly secured to the horizontal base by the reinforce walls 8. The interior surfaces of the reinforce walls 8 are flat. Reinforce ribs 8A are arranged on and formed integrally with the exterior surfaces of the reinforce wall 8 by molding. A plurality of reinforce ribs extend on the reinforce wall 8 in the vertical direction. Another reinforce rib 8A extends along the upper edge of the reinforce wall 8. The thus-configured reinforce walls 8 can be light and strong. In addition, the reinforce ribs 8A can provide the bag with an aesthetic appearance.

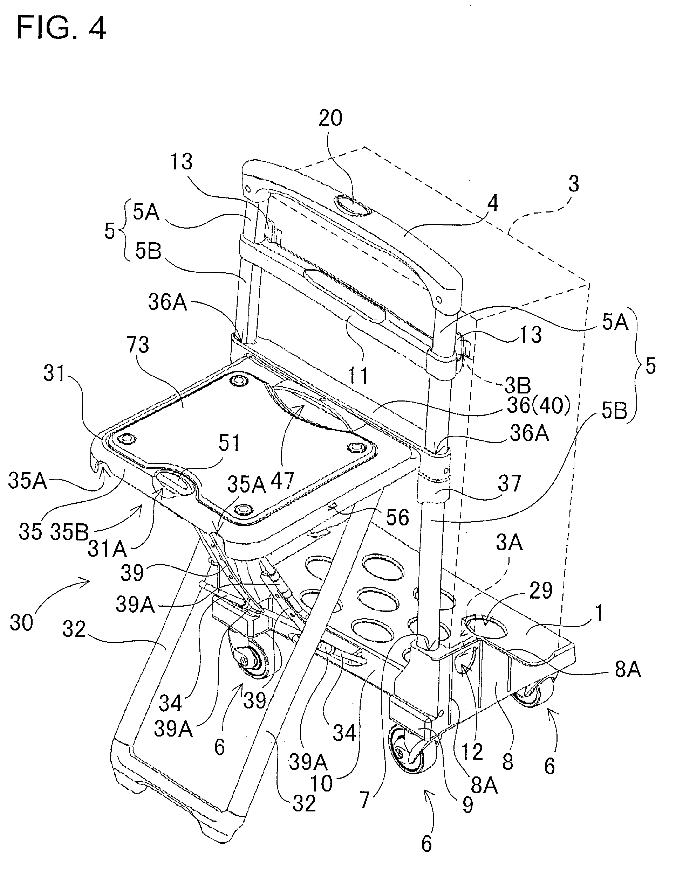

The horizontal base 1 and the reinforce walls 8 are integrally formed of plastic by molding. In the case where the horizontal base 1 and the reinforce walls 8 are integrally formed of plastic by molding, the securing strength between the reinforce walls 8 and the horizontal base 1 can be high. It should be appreciated that, in the bag according to the present invention, the reinforce walls and the horizontal base may be separately formed of plastic, and are then secured to each other by an adhesive, screws, or the like. The reinforce walls 8 on the both sides of the illustrated horizontal base 1 are coupled by a back wall 10. The back wall 10 is arranged on sides of the reinforce walls 8 where the support pipes are secured. The back wall 10 and the reinforce walls 8 are coupled orthogonally to each other. The back wall 10 is formed integrally with the reinforce walls 8 by molding. Thus, the reinforce walls 8 are reinforced to prevent inclination. As shown in Figs. 3 and 4, a central part of the back wall 10 is low in height, and second links 34 of a foldable chair 30 are swingably coupled to the central part of the back wall 10. The reinforce walls 8 have vertical openings that accommodate the support pipes 5. The support pipes 5 are inserted into and secured to the vertical openings 7. In the illustrated bag, the support pipes 5 are a quadrangular pipe. The vertical openings 7 correspondingly have a quadrangular shape. The support pipes 5 are inserted into the vertical openings 7 and are then secured to the reinforce walls 8 by screws. Ends of the screws pass through the reinforce wall 8, and thrust the support pipes 5. It should be appreciated that the support pipes 5 may be secured in the vertical openings 5 by an adhesive, or the support pipes 5 may be interlocked in the vertical openings 5 by an interlocking structure. In the case the support pipes 5 are thus held to the horizontal base 1, the support pipes 5 can be secured to the horizontal base 1 very strongly.

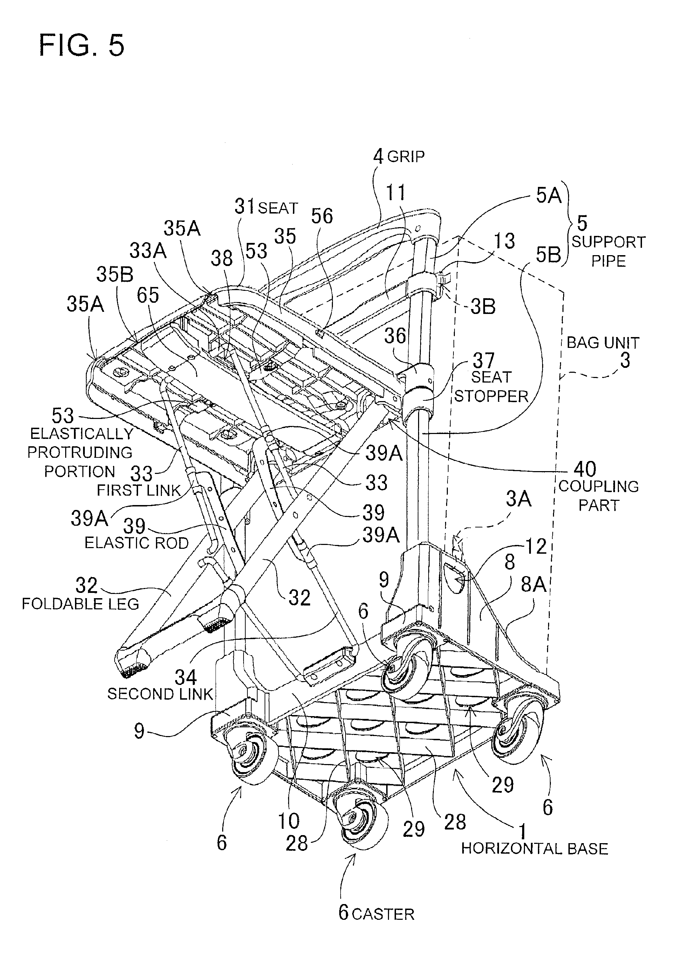

The upper surface of the horizontal base 1 is flat. As shown in Fig. 5, reinforcing ribs 28 are arranged on the lower surface of the horizontal base 1, and is formed integrally with the horizontal base 1 by molding. The reinforcing ribs 28 extend in directions that are inclined with respect to lengthwise and transverse directions of the horizontal base 1. The reinforcing ribs 28 intersect with each other. The horizontal base 1 that includes the reinforce ribs 28 can be strong, even in the case where the entire of the horizontal base 1 is thin. Also, the horizontal base 1 has through holes 29 between the reinforcing ribs 28 that intersect with each other. The through holes 29 pass through the horizontal base 1 in the vertical direction. Thus, the entire weight of the horizontal base 1 can be reduced.

The horizontal base 1 shown in Figs. 3 through 5 includes protruding portions 9 on the back side where the support pipes 5 are arranged, in other words, on the left side in the Figures. The protruding portions 9 protrude in a direction where the protruding portions 9 increase the front-to-back length of the horizontal base 1. The support pipes 5 are arranged on the protruding portions 9. Two of the casters 6 are secured to the lower surfaces of the protruding portions 9. In the horizontal base 1 that includes the protruding portions 9, since the casters 6 that are arranged on the front and back sides of the horizontal base 1 are spaced away from each other at a wider interval, the horizontal base 1 can be stable. In the case where the horizontal base 1 has a rectangular shape, if the shorter edge is small, the horizontal base is more likely to incline in the shorter edge direction. But, since the horizontal base 1 includes the protruding portions 9 so that the casters are spaced away from each other at a wider interval, the stability of the horizontal base 1 can be improved in the shorter edge direction. The casters 6 are arranged at the four corners of the horizontal base 1. The protruding portions 9 are arranged on the ends of an edge of the horizontal base 1 where the support pipes 5 are secured. In the case where the horizontal base 1 includes the protruding portions 9, the front-to-back length is 14 to 16 cm, and the side-to-side length of the horizontal base 1 is 20 to 35 cm. The front-to-back length may be 14 to 16 cm.

In the bag shown in Fig. 3, the foldable chair 30 is coupled to the bag to be foldable between the protruding portions 9. Thus, the front-to-back length of the bag is not increased. This bag has features in that the stability of the bag is improved by the protruding portions 9 and in that the foldable chair 30 can be accommodated in space between the protruding portions 9.

In the illustrated bag, the bag unit 3 is attached onto the upper surface of the horizontal base 1 between the reinforce walls 8 and the back wall 10. The bag unit 3 can be made of flexible sheets by sewing. In the bag, the bag unit 3 is configured detachable. It should be appreciated that the bag unit may be non-detachably secured onto the horizontal base. The bag shown in Figs. 3 through 5 has attachment apertures 12 and attachment hooks 13 so that the bag unit 3 is detachably attached.

Each of the reinforce walls 8 has the attachment aperture 12. The attachment aperture 12 is arranged in an upper part of the reinforce wall 8 on the side close to the support pipe 5, and passes through the reinforce wall 8. Attachment bands 3A are secured to the bag unit 3, and are inserted into the attachment apertures 12 so that the bag unit 3 is attached to the horizontal base 1. The illustrated attachment apertures 12 have a half-ellipse shape that has a straight upper edge and a curved lower edge. The thus-shaped attachment aperture 12 has a feature in that the attachment band 3A secured to the bag unit 3 can be smoothly inserted into the attachment aperture 12 so that the bag unit 3 is attached to the horizontal base 1. The attachment aperture may have a slit shape. Also, although not illustrated, the horizontal base may have the attachment aperture. In this case, the attachment aperture can be arranged on a side of the horizontal base opposite to the side where the support pipes are secured, and can be an aperture that passes through the horizontal base.

Each of the support pipes 5 includes the attachment hook 13. In the illustrated bag, each of the support pipes is composed of a guide tube 5B, and a sliding rod 5A. The lower end of guide tube 5B is secured to the horizontal base 1. The sliding rod 5A is telescopically inserted into the guide tube 5B. Upper end parts of the guide tubes 5B are coupled by a coupling rod 11. The attachment hooks 13 are arranged on the coupling rod 11. The coupling rod 11 is formed integrally with the attachment hooks 13 of plastic by molding. The coupling hooks 13 are orientated in the vertical direction, and are inserted into attachment hangers 3B secured on bag unit 3 so that the bag unit 3 is hung by the coupling hooks 13. The coupling hooks 13 are inserted into the attachment hangers 3B that are arranged on an upper part of the bag unit 3, and the attachment bands 3A that are arranged on a lower part of the bag unit 3 are coupled to the horizontal base 1 so that the bag unit 3 is held. When the attachment bands 3A are coupled to the horizontal base 1, the bag unit will not moved upward from the horizontal base 1. The attachment hooks 13 that are orientated in the vertical direction hold the bag unit 3 that cannot be moved upward.

The bag unit 3 is simply detachably attached and firmly held by the aforementioned attachment apertures 12 and the aforementioned attachment hooks 13 as follows:
(1) Hang the attachment hangers 3B of the bag unit 3 onto the attachment hooks 13.
(2) After that, insert the attachment bands 3A on the lower part of the bag unit 3 into the attachment apertures 12 in the reinforce walls 8 of the horizontal base 1 so that the attachment bands 3A are coupled to the reinforce walls 8. One end of the attachment band 3A is sewed or adhered onto the bag unit 3. A detachable fastener is arranged on the other, free end of the attachment band 3A. The detachable fastener can be a button, a clasp, a hook, a Velcro fastener (registered trademark) or the like. The free ends of the attachment bands 3A are inserted into the attachment apertures 12, and the free ends are coupled to the bag unit 3 by the detachable fasteners. Thus, the bag unit 3 can be held to the horizontal base 1.

Contrary to the attachment, in the case where the bag unit 1 attached to the horizontal base 1, when the attachment bands 3A are decoupled, and the bag unit 1 is then moved upward, the bag unit 1 can be detached from the horizontal base 1. The thus-configured bag unit 1 can be detachably attached by coupling the lower and upper parts of the bag unit 1 to the horizontal base 1 and the attachment hooks 13, respectively. In addition, the bag unit 1 can be firmly held to the horizontal base 1. The bag unit may include the attachment bands on the upper and lower parts of the bag unit. In this case, the bag unit can be attached to the horizontal base by coupling the attachment bands on the upper and lower parts to the horizontal base without using the attachment hooks.

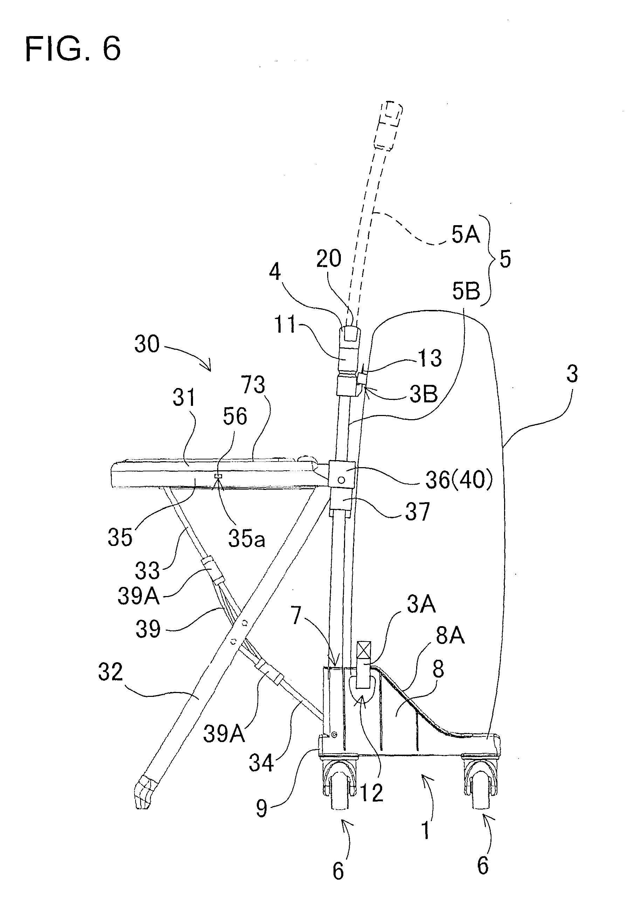

As shown in Figs. 6, 7 and 9, when the support pipes 5 are elongated to move the grip 4 upward, the support pipes 5 are curved so that the grip 4 is shifted from the back side of the horizontal base 1 where the support pipes 5 are arranged toward the center of the horizontal base 1.
When moved upward, the grip 4 can be shifted by the support pipes 5 in a direction close to the center from the back of the horizontal base 1. It should be appreciated that the support pipes are not always required to be curved to shift the grip to the center of the horizontal base when the grip is moved upward.

Also, although not illustrated, the support pipes may be secured to the horizontal base to be inclined so that the grip is shifted from the back side of the horizontal base where the support pipes 5 are arranged toward the center of the horizontal base when the support pipes are elongated to move the grip upward. For example, in the case where the support pipes are secured on the left side of the horizontal base, when the grip is moved upward, the support pipes are inclined so that the grip is shifted from the left side toward the right side of the horizontal base. Also, in the case where the support pipes are inclined, similar to the case where the support pipes are curved, the support pipes are not always inclined to be curved to shift the grip to the center of the horizontal base when the grip is moved upward.

Also, although not illustrated, the bag may include a curved support pipes that are inclined and are secured to the back side of the horizontal base so that the grip is shifted from the back side toward the center of the horizontal base when the grip is moved upward. In this bag, to shift the grip to a position close to the center of the horizontal base when the grip is moved upward, the radius of curvature of the support pipes can be greater, and the inclination angle of the support pipes can be closer to the vertical angle. The reason is that the grip can be shifted according to both the inclination and the curvature from the back side to the center of the horizontal base when the grip is moved upward.

In the thus-configured support pipes 5, when the support pipes 5 are elongated so that the grip 4 is moved upward, the grip 4 is shifted from the back side of the horizontal base 1 where the support pipes 5 are arranged toward the center of the horizontal base 1. However, the support pipes are not always required to shift the grip from the back side toward the center of the horizontal base. The support pipes may be configured to move the grip to a position right above the back side when the support pipes are elongated so that the grip is move upward.

Support pipe stoppers 15 hold the support pipes 5 so that the grip 4 is located on the top of or above the bag unit 3 when the support pipes 5 are collapsed, in other words, when the grip 4 is fully lowered. The support pipes 5 are designed so that the height of upper surface of the grip 4 is approximately 50 cm from the bottom of the casters 6 when the support pipes 5 are fully collapsed so that the grip 4 is fully lowered. The support pipes 5 may be designed so that the height of the upper surface of the grip 4 is preferably 30 to 80 cm, more preferably 35 to 70 cm from the bottom of the casters 6 when the support pipes 5 are fully collapsed so that the grip 4 is fully lowered. For ease of gripping the grip 4, the grip 4 is located lower than the bag unit 3 when the support pipes 5 are fully collapsed so that the grip 4 is fully lowered. When the support pipes 5 are elongated, in other words, when the grip 4 is fully raised, the support pipe stoppers 15 hold the support pipes 5 at a position where the height of the center of the grip 4 is preferably 60 to 100 cm, more preferably 65 to 85 cm from the bottom of the casters 6.

Each of the support pipes 5 includes a guide tube 5B, and sliding rods 5A. The guide tube 5A is secured to the horizontal base 1 and extends in the vertical direction. The sliding rod 5A is telescopically inserted in the guide tube 5B. The grip 4 is secured to the top ends of the sliding rods 5A. The guide tube 5B and the sliding rod 5A can be metal tubes with different sizes from each other. The guide tube and the sliding rod may be square tubes formed of plastic.

In the illustrated bag, two support pipes 5 are secured on the back side of the horizontal base 1, and the grip 4 is coupled to the upper ends of the two support pipes 5. Also, in the illustrated bag, the two supports pipes 5 are secured to both ends of the back side edge of the horizontal base 1. That is, the side-to-side distance between the two support pipes 5 is substantially equal to the length of a longer edge of the rectangular horizontal base 1. In the case where the two supports pipes 5 are secured to the both ends of the edge of the horizontal base 1, the support pipes 5 have a feature in that the support pipes 5 can more firmly stand upright. The reason is that the size of the outline of a rectangle can be large that is formed by the two support pipes 5, the horizontal base 1 and the grip 4. In this case, when users push the grip to wheel the bag with the support pipes 5 being elongated, it is possible to extremely suppress that a force that pushes the bag in a moving direction is applied to the support pipes 5 in a direction where the support pipes 5 topple. For this reason, even when users walk with gripping the grip 4, or when users use the bag as a walking stick and push the bag, the support pipes 5 are prevented from toppling and allow the users to stably wheel the bag. Also, since a load can be extremely reduced that is applied to a coupling part between the support pipes 5 and the horizontal base 1, there is a feature in that damage to the coupling part can be effectively prevented.

In the case where the two supports pipes 5 are secured to the both ends of the longer edge of the horizontal base 1, the support pipes 5 are located on an end of the forward side and an end of the backward side of the horizontal base 1 in the moving direction of the horizontal base 1 when users wheel the bag on the casters 6. Thus, the support pipe 5 on the frontward side applies a force to the horizontal base 1 in a direction where the horizontal base 1 is pulled, and the support pipe 5 on the backward side applies a force to the horizontal base 1 in a direction where the horizontal base 1 is pushed so that users can smoothly wheel the horizontal base 1 by a small force. In this case, in particular, the horizontal base 1 has excellent steering directivity when users wheel the bag. Therefore, the bag has a feature in that, in the case where the horizontal base 1 includes the casters at the four corners on its bottom that is free to swivel, the horizontal base 1 has excellent directivity so that users can stably wheel the bag.

The coupling rod 11 is coupled to the upper end parts of guide tubes 5B of the two support pipes 5. The lower ends of the guide tubes 5B are secured to the horizontal base 1. The upper end parts of the guide tubes 5B are coupled by the coupling rod 11. In the case where the upper end parts of the guide tubes 5B are coupled by the coupling rod 11, the two support pipes 5 are reinforced so that the two support pipes 5 can more stably stand upright. As shown in Fig. 3, insertion space 14 is formed between the grip 4 and the coupling rod 11 so that users can insert their hand into the space 14 even when the grip 4 is fully lowered. This is for ease of gripping the lowered grip 4. The illustrated grip 4 is formed of plastic in a U shape as a whole. Bent parts on the both ends of the grip 4 are coupled to the sliding rods 5A to form the insertion space 14.

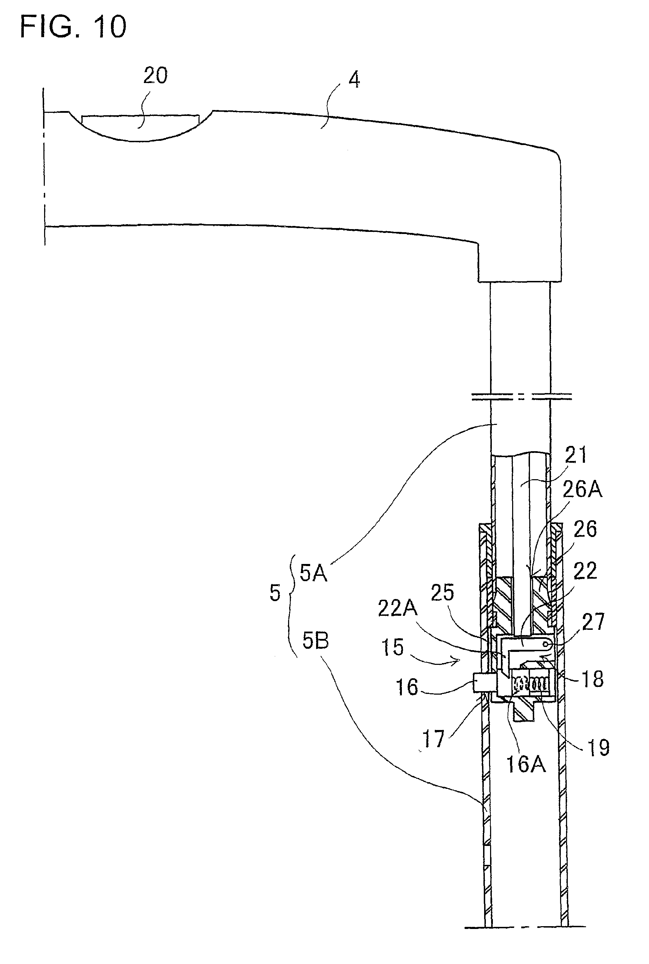

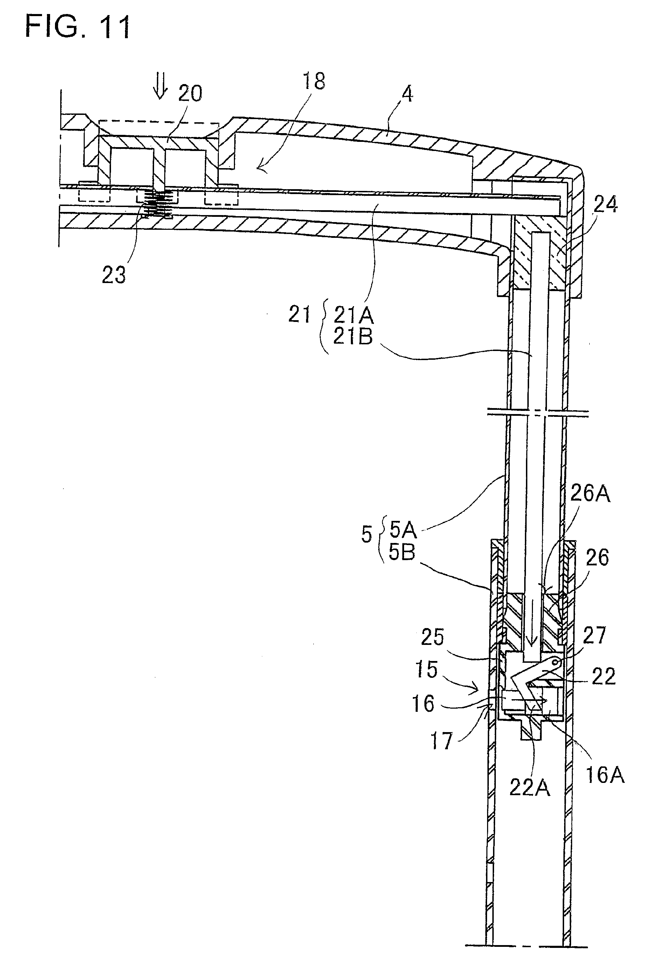

As the support pipe stoppers 15, any mechanism can be used that can stop telescopic movement of the support pipes 5. Figs. 10 and 11 show an example of the stopper 15. The illustrated support pipe stopper 15 is arranged in a lower part of the sliding rod 5A, and includes a protruding pin 16, a receiving portion 17, and a disengaging mechanism 18. The protruding pin 16 elastically protrudes toward the guide tube 5B. The receiving portion 17 is arranged in the guide tube 5B, and receives the protruding pin 16. The disengaging mechanism 18 forcedly retracts the protruding pin 16 from the receiving portion 17.

The protruding pin 16 is mounted in the lower end part of the sliding rod 5A by an elastic member 19 to elastically protrude toward the guide tube 5B. The elastic member 19 biases the protruding pin 16. Thus, the protruding pin 16 can elastically protrude from the sliding rod 5A. The receiving portion 17 can be a through hole or a recessed portion into which the protruding pin 16 is inserted. The illustrated guide tube 5B has a through hole. This through hole opens to serve as the receiving portion 17 into which the protruding pin 16 is inserted. In the case where the receiving portion 17 is a through hole, there is a feature in that the protruding pin 16 can protrude outward from the guide tube 5B through the through hole so that the support pipe 5 can be reliably held. In this case, users can very safely use the support pipes 5 as a walking stick. In other words, the support pipes 5 can bear the weight of users when the users put their weight on the support pipes 5. The reason is that it can be effectively prevented that unintentional disengagement of the protruding pin 16 from the receiving portion 17 may collapse the support pipes 5. Also, there is a feature in that it can be prevented that the unintentional disengagement may elongate the support pipes 5 when users lift the bag by the grip 4. The support pipe stoppers 15 that can reliably hold the position of the sliding rods 5A have features in that the bag can be very safely used when grip 4 is raised and lowered. It should be appreciated that the receiving portion may be a recessed portion into which a free end of the protruding pin is inserted.

Although not illustrated, the guide tube 5B can have the receiving portions 17 at positions where the sliding rod 5A can be inserted into the receiving portions 17 when the sliding rod 5A is fully raised, raised in a middle position, and fully lowered. When the sliding rod 5A is fully raised, the protruding pin 16 is inserted into the top receiving portion 17. When the sliding rod 5A is fully lowered, the protruding pin 16 is inserted into the bottom receiving portion 17. When the sliding rod 5A is raised in a middle position, the protruding pin 16 is inserted into the middle receiving portion 17. Thus, the telescopic movement of the support pipe 5 can be stopped. In the case where the guide tube 5B of the support pipe 5 has the receiving portions 17 at the middle position, the telescopic movement of the sliding rod 5A can be stopped at a plurality of positions. It should be appreciated that the support pipe is not always required to be held at the middle position but may be held only at raised and lowered positions. Also, the guide tube 5B of the support pipe 5 may have a plurality of receiving portions 17 in a middle part of the guide tube 5B so that the sliding rod 5A can be held at a plurality of middle positions when raised to middle height. In the case of this support pipe 5, users can move the grip 4 to one of the middle positions to select the most suitable position of the grip 4.

The disengaging mechanism 18 includes a push button 20 arranged in the grip 4, a push rod 21 that is connected to the push button 20 and is moved in the vertical direction by the push button 20, and a pivot member 22 that is pushed by the lower end of the push rod 21 and pivots to forcedly retract the protruding pin 16.

The push button 20 is arranged in the middle part of the upper surface of the grip 4, and can be moved in the vertical direction. The push button 20 is coupled to the lower surface of the grip 4 via an elastic member 23, and is elastically biased by the elastic member 23. The lower surface of the push button 20 is coupled to the push rod 21. When users push the push button 20 with their finger or thumb to move the push button 20 downward, the push rod 21 is moved downward.

The push rod 21 is accommodated in the grip 4 and the sliding rod 5A, and is moved in the vertical direction to pivot the pivot member 22. The illustrated push rod 21 includes a horizontal rod portion 21A that is coupled to the lower surface of the grip 4, and vertical rod portions 21B that are inserted in the sliding rods 5A. The both ends of the horizontal rod portion 21A are located above the upper ends of the vertical rod portions 21B. When pushed downward, the horizontal rod portion 21A pushes the vertical rod portions 21B downward. The upper end of the vertical rod portion 21B is inserted into an insertion cap 24 that is moved inside the sliding rods 5A in the vertical direction. Thus, the vertical rod portion 21B can be certainly moved inside the sliding rods 5A in the vertical direction. The both ends of the horizontal rod portion may be coupled to the upper ends of the vertical rod portions. For example, the push rod may be one U-shaped rod. The lower end of the push rod 21 extends to a lower end part of the sliding rod 5A.

The pivot member 22 is coupled to the lower end part of the sliding rod 5A. When pushed by the lower end of the push rod 21, the pivot member 22 pivots to forcedly retract the protruding pin 16. A guide cap 25 is fitted in the lower end part of the illustrated sliding rod 5A. The pivot member 22 is attached to the interior side of the guide cap 25 to pivot on a vertical plane. The guide cap 25 has a fit-in cylindrical portion 26 that is inserted into the sliding rod 5A. The fit-in cylindrical portion 26 has an insertion hole 26A that opens to accommodate the push rod 21 so that a lower part of the push rod 21 can be certainly moves in the vertical direction. One end of the pivot member 22 is coupled to the guide cap 25 via a pivot shaft 27. Pins 22A are arranged on the both lateral sides of the other end of the pivot member 22, and protrude from the other end of the pivot member 22. When pushed by the push rod 21, the pivot member 22 pivots so that the free ends of the pins 22A contact protruding portions 16A that are arranged on lateral sides of the protruding pin 16. Thus, the pivoting pins 22A push to forcedly retract the protruding pin 16. When a pushing force is released from the push rod 21, a pushing force of the pins 22A of the pivot member 22 is correspondingly released from the protruding pin 16. Accordingly, the protruding pin 16 elastically biased by the elastic member 19 so that the pivot member 22 is pivoted back to a rest orientation.

In the thus-configured disengaging mechanism 18, when users push the push button 20, the push rod 21 is pushed downward to pivot the pivot members 22 in the lower end parts of the push rod 21. When the pivot members 22 pivot, the free ends of the pins 22A move the protruding pins 16 in a retracting direction. Thus, the protruding pins 16 are retracted from the receiving portions 17. This retraction releases the support pipe stoppers 15, and allows the sliding rods 5A to move inside the guide tubes 5B in the vertical direction. When users release the push button 20, the protruding pins 16 are biased by the elastic members 16 to be able to protrude toward the guide tubes 5B.

In the support pipe stopper 15, users push the push button 20 of the disengaging mechanism 18 on the grip 4 to forcedly retract the protruding pins 16 so that the support pipe stopper 15 are released. After releasing the support pipe stoppers 15, users move the sliding rods 5A upward or downward. When the protruding pins 16 are retracted, the sliding rods 5A can be moved inside the guide tubes 5B. After releasing the push button 20, when users adjust the height of the grip 4 to a predetermined position, the protruding pins 16 are inserted into the receiving portions 17 to stop telescopic movement of the support pipes 5. Thus, upward and downward movement of the grip 4 is stopped.

The aforementioned support pipe stopper 15 is simply configured and can hold the support pipe 5 at the predetermined positions. It should be appreciated that, in the bag according to the present invention, the stopper is not limited to the aforementioned configuration. The stopper can have any configuration capable of holding the support pipe at a predetermined position.

To the bag shown in Figs. 3 through 5, the foldable chair 30 is mounted between the pair of support pipes 5. In the bag including the foldable chair 30, users can unfold the chair and sit on the unfolded chair at rest during a wait or when they are tired. In particular, since users can use the bag according to the present invention as a walking stick in the case where the grip 4 is held at a higher position when they walk, the foldable chair 30 provides a feature in that users can comfortably use the bag both when they walk and take a rest.

In the illustrated bag, the foldable chair 30 is arranged between the protruding portions 9 of the horizontal base 1. For this reason, according to this bag, the foldable chair 30 can be folded to prevent that the foldable chair 30 lies off the protruding portions 9 so that the front-to-back length of the bag is not increased as a whole.

The foldable chair 30 includes a seat 31, foldable legs 32, a first link 33, second links 34, and elastic rods 39. Users can sit on the seat 31 with the seat 31 being unfolded . The foldable legs 32 stably support the seat 31 when unfolded. The first link 33 supports the lower surface of the seat 31 in a horizontal orientation. The second links 34 support the foldable legs 32 at a predetermined angle when the foldable legs 32 are unfolded. The elastic rods 39 are coupled to the second links 34 and the first link 33.

One side of the seat 31 is coupled to the support pipes 5 swingably and movably in the vertical direction. The seat 31 is formed of plastic by molding. A peripheral wall 35 is integrally formed with the seat 31 along sides and a free-end side of the seat 31 to protrude from the lower surface of the seat. The peripheral wall 35 has first recessed portions 35A that accommodate the foldable legs 32 when the seat is folded, and a wide recessed portion 35B that accommodates the second links 34 when the seat is folded. In the seat 31, when the foldable chair 30 is folded, the foldable legs 32 are guided to the first recessed portions 35A, and the second links 34 are guided to the wide recessed portion 35B so that the foldable leg 32 and the second links 34 are accommodated in place. In other words, when the seat 31 is folded in an orientation parallel to the support pipes 5, the foldable legs 32 are accommodated in the first recessed portions 35A, and the second links 34 are accommodated in the wide recessed portion 35B.

The seat 31 is swingably coupled to a vertical slider 36 that moves along the support pipes 5 in the vertical direction. The both ends of the vertical slider 36 are slidably coupled to the guide tubes 5B of the support pipes 5. The guide tube 5B is a quadrangular tube. Correspondingly, the vertical slider 36 has quadrangular through holes 36A at the both ends of the vertical slider 36. The guide tubes 5B are inserted into the through holes 36A. Thus, the vertical slider 36 can slide on the guide tubes 5B. When the foldable chair 30 is folded/unfolded, the vertical slider 36 moves along the guide tubes 5B of the support pipes 5 in the vertical direction in a horizontal orientation. Seat stoppers 37 are secured on the support pipes 5 to stop downward movement of the vertical slider 36. The downward movement of the vertical slider 36 is stopped when the vertical slider 36 contacts the seat stoppers 37. The seat stopper 37 is formed in a tubular shape to which the support pipe 5 can be inserted, and is secured on the support pipe 5 non-movably in the vertical direction.

The foldable legs 32 are metal pipes that form a part of a U shape. The lower ends of the metal pipes are coupled by the bottom part of the U shape. The upper ends of the foldable legs 32 are swingably coupled to the vertical slider 36. The foldable legs 32 swing relative to the support pipes 5 to be folded/unfolded. When the foldable legs 32 are unfolded, the lower ends of the foldable legs 32 are moved away from the support pipes 5 so that the unfolded foldable legs 32 and the support pipes 5 can stably support the seat 31. When unfolded, the foldable legs 32 support the seat 31 in a substantially horizontal orientation.

The lower ends of the first link 33 are coupled to the foldable legs 32 so that the first link 33 can swing to support the seat 31 in the horizontal orientation. The first link 33 is a U-shaped metal rod. The both ends of the first link 33 are coupled to the foldable legs 32 so that the first link 33 can swing. The seat 31 has slits 38 on its lower surface side. A horizontal portion 33A as the middle part of the U-bent metal rod can slide along the slits 38. As the seat 31 is unfolded relative to the foldable legs 32, the horizontal portion 33A of the first link 33 slides along the slits 38 of the seat 31. As shown in Figs. 5 through 8, the first link 33 supports the seat 31 in the horizontal orientation when the upper end (horizontal portion) of the first link 33 is inclined toward the free-end side of the seat 31. As the seat 31 is folded, the horizontal portion 33A of the first link 33 slides along the slits 38 rearward of the seat 31, in other words, rightward in Fig. 9.

The second links 34 are two rods. One end of each second link 34 is coupled to each foldable leg 32. The other end is coupled to the horizontal base 2. The second links 34 can swing relative to the horizontal base 1. Another end as the upper end of the second link 34 is coupled to a lower point of the foldable leg 32 relative to the lower end of the first link 33. In other words, the lower end of the first link 33 is coupled to an upper point of the foldable leg 32 relative to the upper end of the second link 34. In this configuration, the first and second links 33 and 34 can be simply coupled to the foldable legs 32 not to intersect with each other. The second link 34 is swingably coupled at the another end to an upper part of the back wall 10 of the horizontal base 1. The second links 34 are coupled to middle parts of the foldable legs, and restrict an inclination angle of the foldable legs 32 to a certain angle. When the foldable leg 32 is unfolded, the vertical slider 36 moves downward as shown by an arrow B in Fig. 7. As the vertical slider 36 moves downward, the inclination angle of the foldable legs 32 is getting greater. The downward movement of the vertical slider 36 is stopped when the vertical slider 36 contacts the seat stoppers 37 as shown in Fig. 6. In this state, the second links 34 stop the swinging of the foldable legs 32.

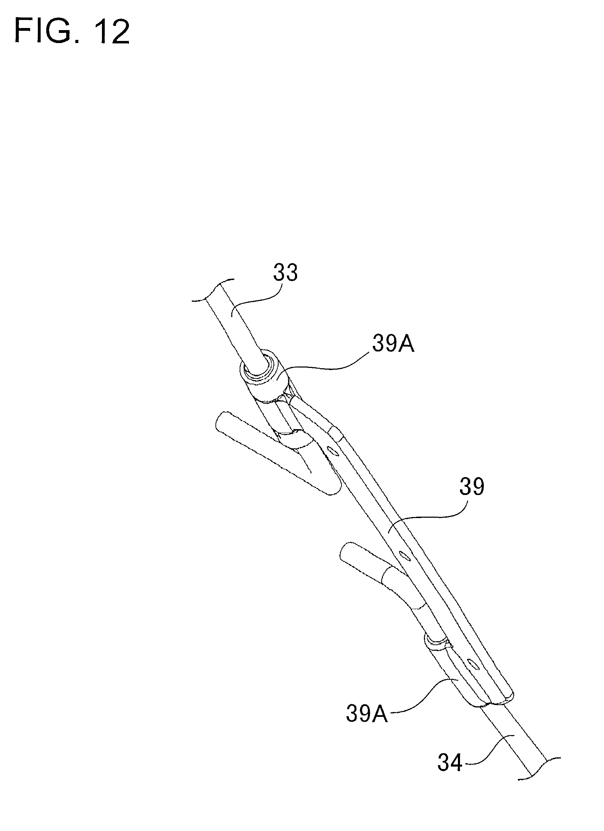

The elastic rod 39 is formed of elastically-deformable hard plastic such as nylon, polyethylene, polystyrene, and polypropylene. The elastic rod 39 shown in Fig. 12 has tube portions 39A on its both ends. The first link 33 and the second link 34 are inserted into the tube portions 39A and coupled to each other by the elastic rod 39. A middle part of the tube portion 39A between the both ends of the elastic rod 39 is formed in a plate shape. The elastic rod 39 is shaped not to elastically deform when the first and the second links 33 and 34 are folded between the support pipes 5. The tube portions 39A of the elastic rod 39 protrude from both the upper and lower ends of the elastic rod 39 so that the elastic rod 39 is arranged inward of the first link 33 and the second link 34 when the seat is folded.

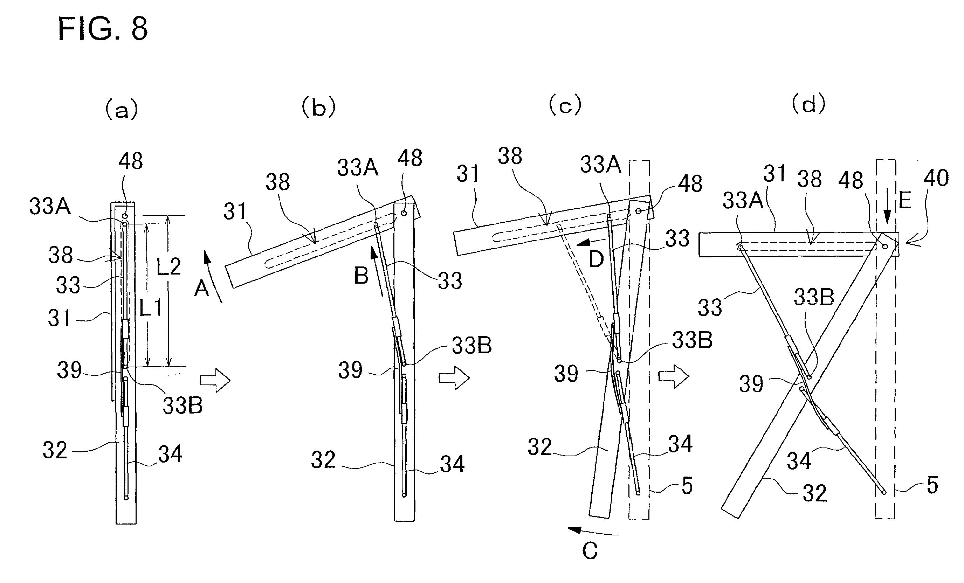

In the illustrated foldable chair 30, the foldable leg 32 is configured to be able to swing in cooperation with the unfolding movement of the seat 31 so that the lower ends of the foldable legs 32 move away from the support pipes 5. This configuration is now described with reference to a schematic view of Fig. 8. Fig. 8(a) of shows the folded chair with the seat 31, the foldable legs 32, the first link 33, and the second links 34 being in an orientation parallel to the support pipes 5. When the seat 31 is unfolded toward the horizontal orientation, the first link 33 restricts the inclination angle of the seat 31 relative to the foldable leg 32 as shown in Fig. 8(b). The reason is that the interval (L1) between the horizontal portion 33A of the first link 33 and a coupling point 33B of the foldable leg 32 coupled to the first link 33 is shorter than the interval (L2) between a swing shaft 48 of the foldable legs 32 and the coupling point 33B. As shown by the arrow A in Fig. 8(b), when swinging about the swing shaft 48 toward the horizontal orientation, the seat 31 pulls the horizontal portion 33A of the first link 33 in the slits 38 on the lower surface side of the seat 31 upwardly in a direction of a swing direction of the seat 31 shown by the arrow B. Thus, the first link 33 will apply a pulling force to the coupling points 33B of the foldable legs 32 in a direction shown in by the arrow B. When pulled by the first link, the foldable legs 32 will swing in a direction shown by an arrow C in Fig. 8(c) by the rotation moment about the swing shaft 48. That is, the foldable legs 32 swing away from the support pipes 5 in cooperation with the unfolding movement of the seat 31.

When the foldable legs 32 swing away from the support pipes 5, the second links 34 swing away from the support pipes 5 in cooperation with the swinging of the foldable legs 32. Thus, as shown in Fig. 8(c), the elastic rods 39 elastically deform, and bias the first link 33 in a direction shown by an arrow D in Fig 8(c). When deforming, the elastic rods 39 apply an elastic force to the horizontal portion 33A of the first link 33 in the direction shown by the arrow D in Fig 8(c), in other words, in a direction in that the horizontal portion 33A of the first link 33 is moved away from the support pipes 5. When moving in this direction, the horizontal portion 33A slides along the slits 38 of the seat 31 toward the free-end side of the seat 31. After that, the coupling part 40 of the seat 31 is moved downward as shown by an arrow E in Fig. 8(d) so that the foldable legs 32 swing to a largely inclined angle. As a result, the seat 31 is supported in the horizontal orientation by the unfolded foldable legs 32 and the first link 33 that is inclined toward the free-end side of the seat 31.

According to the thus-configured foldable chair, when unfolding the seat 31, the users are required neither to unfold the foldable legs 32 with their hand nor to pivot the first link 33 toward the free-end side of the seat 31 with their hand. Therefore, users can easily and quickly unfold the seat 31. However, in the bag according to the present invention, it is not always necessary for the foldable leg 32 to swing, when the foldable seat is unfolded, in cooperation with the unfolding movement of the seat so that the lower ends of the foldable legs move away from the support pipes. When the seat is unfolded toward the horizontal orientation, the foldable legs may be unfolded by the downward movement of the coupling part between the seat and the support pipes.

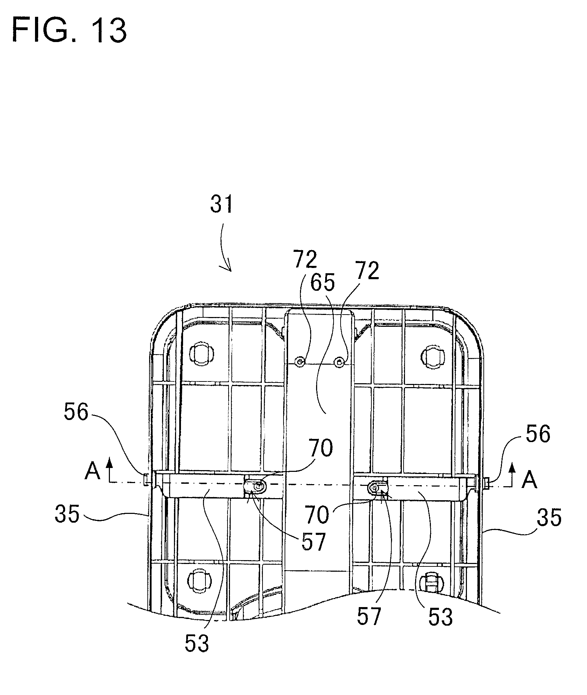

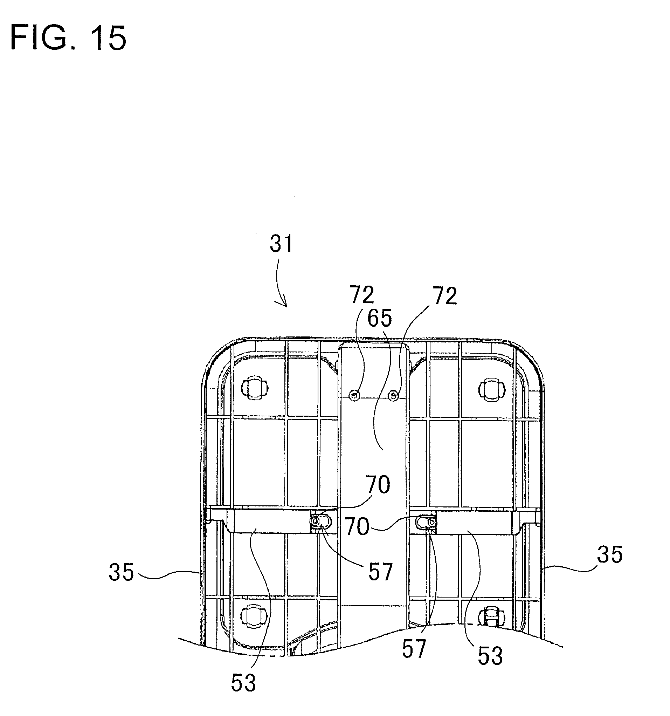

Also, the illustrated bag includes a locking mechanism 50 that holds the seat 31 in the vertical orientation. As shown in Figs. 13 through 18, the locking mechanism 50 includes a lock release button 51, interlocking portions 52, elastically protruding portions 53, and a linkage mechanism 54. The lock release button 51 releases the holding of the seat 31 so that the seat 31 swings from the vertical orientation to the horizontal orientation. The interlocking portions 52 are arranged on the support pipes 5. The elastically protruding portions 53 are coupled to the lower surface of the seat 31, and elastically protrude toward an interlocking position to interlock with the interlocking portions 52. The linkage mechanism 54 couples the elastically protruding portions 53 to the lock release button 51 so that the elastically protruding portions 53 can be retracted from the interlocking position to an interlocking release position.

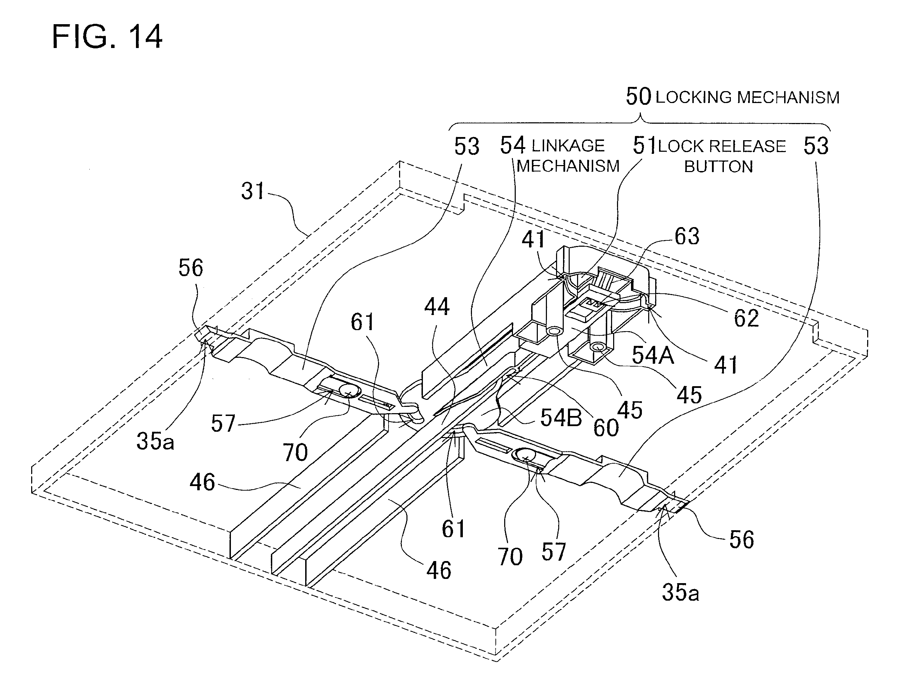

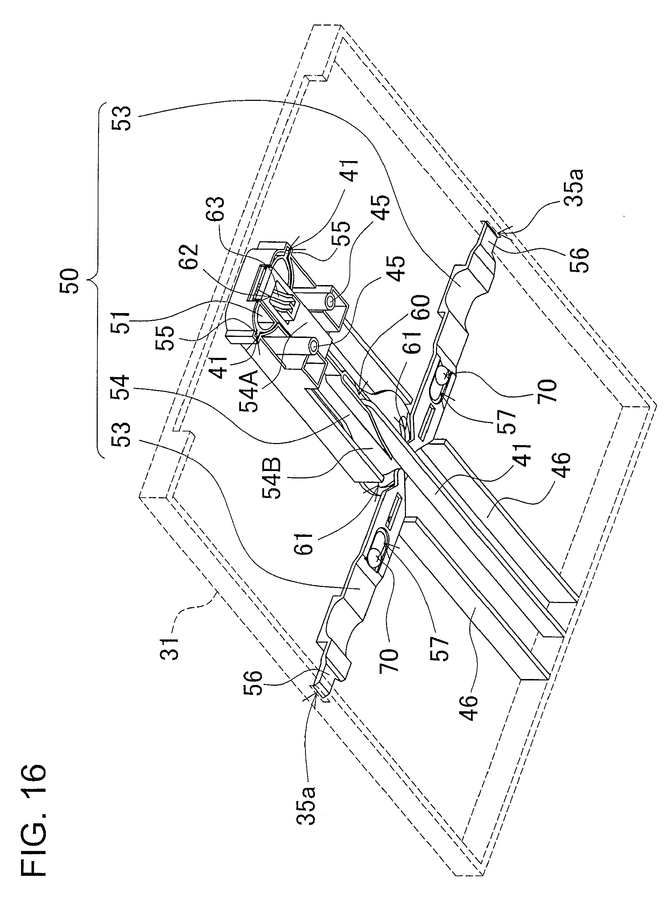

The lock release button 51 is located on the free-end side of the seat 31, in other words, the side opposite to the coupling part 40 that couples the seat 31 to the support pipes 5. In the foldable chair 30 shown in Fig. 4, the seat 31 has a recessed portion 31A in the free-end side of the seat 31. The lock release button 51 is arranged in the recessed portion 31A. The lock release button 51 is arranged not to protrude from the upper surface of the seat 31. The surface of the lock release button 51 is arranged coplanar with the upper surface of the seat 31, or is recessed from the upper surface of the seat 31 so that users sit on the seat 31 without interference with the lock release button 51. The lock release button 51 is biased by the linkage mechanism 54 to elastically protrude toward the surface of the seat 31. As shown in Figs. 14 and 16, the lock release button 51 is formed integrally with ribs 55 on the both sides of the lock release button 51. The ribs 55 extend in the vertical direction. The seat 31 has guide grooves 41 that guide the ribs 55 to move in the vertical direction. The upper ends of the guide grooves 41 are closed. Contact of the ribs 55 with the upper ends of the guide grooves 41 positions the top position of the lock release button 51 in the seat 31. In other words, the lock release button 51 is configured not to be detached from the upper surface of the seat when the linkage mechanism 54 presses the lock release button 51 upward.

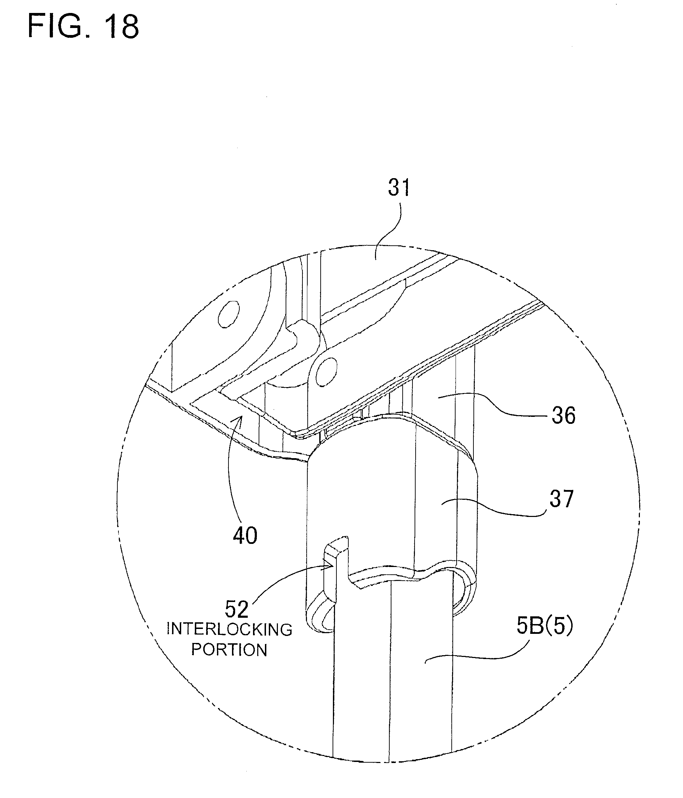

In the illustrated foldable chair 30, as shown in Fig. 18, the seat stoppers 37 that stop downward movement of the seat 31 also serve as the interlocking portions 52. Recessed portions are formed as the interlocking portions 52 on insides of the seat stoppers 37 that are opposed to each other, and accommodate the elastically protruding portions 53. When the recessed portions as the interlocking portions 52 accommodate the elastically protruding portions 53, the seat 31 is held in the vertical orientation.

The elastically protruding portions 53 protrude from the both sides on the lower surface of the seat 31, and are coupled to each other to protrude/retract in directions opposite to each other. The seat shown in Figs. 13 through 17 includes the pair of elastically protruding portions 53 that protrude from the both sides of the seat 31. Also, the illustrated elastically protruding portions 53 are formed of plastic in a plate by molding. An interlocking protrusion 56 is arranged on the side end of each elastically protruding portion 53 to be inserted into the interlocking portion 52. The seat 31 has through holes 35a on the peripheral wall 35 to allow the interlocking protrusions 56 to protrude through the through holes 35a. The shape of the through hole 35a is larger than the outside shape of the interlocking protrusion 56 so that the interlocking protrusion 56 can protrude/retract from/into the through hole 35a. Each of the elastically protruding portions 53 has a slot 57 that extends in a protruding/retracting direction. The elastically protruding portion 53 is coupled to the lower surface of the seat 31 through the slot 57 to be able to protrude/retract from/into the seat 31. A screw 70 is arranged in each slot 57 to be able to slide relative to the slot 57. Each screw 70 is screwed into a boss 42 that is arranged on the lower surface of the seat 31. The diameter of a head of the screw 70 is greater than the width of the slit 57. Thus, the screw 70 couples the elastically protruding portion 53 to the seat 31 to be able to protrude/retract from/into the seat 31. The elastically protruding portion 53 is coupled to the seat 31 by the screw 70 with the interlocking protrusion 56 of the elastically protruding portion 53 being inserted in the through hole 35a. When protruding from the peripheral wall 35 of the seat 31, the interlocking protrusion 56 can interlock with the interlocking portion 52. When retracting into the through hole 35a, the interlocking protrusion 56 can be disengaged from the interlocking portion 52.

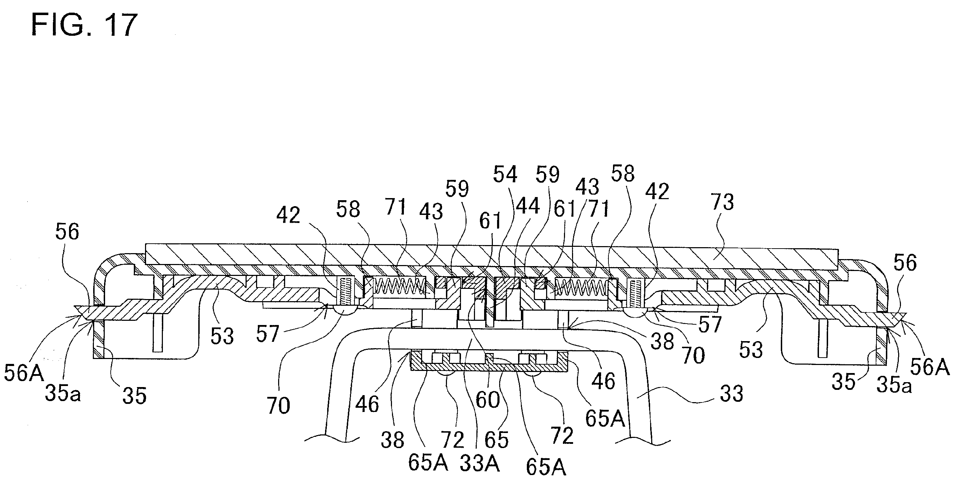

As shown in Fig. 17, the interlocking protrusion 56 of each elastically protruding portion 53 is biased to elastically protrude from the seat 31 by an elastic member 71 that is coupled between the protruding portion 53 and the seat 31. The elastic member 71 of a push spring extends between ribs 43 and 58 that are formed integrally with the seat 31 and the elastically protruding portion 53, respectively, to elastically protrude the interlocking protrusion 56 of the elastically protruding portion 53. The elastically protruding interlocking protrusion 56 has an inclined surface 56A on the lower side from a viewpoint where the seat 31 is orientated in the horizontal orientation. The inclined surface 56A is inclined so that the bottom edge is located closer to the peripheral wall 35 of the seat 31 from the top edge. When the seat 31 is folded from the horizontal orientation to the vertical orientation, the inclined surface 56A of the interlocking protrusion 56 slides on the inside surface of the seat stopper 37, and the interlocking protrusion 56 is smoothly retracted into the peripheral wall of the seat 31. After that, when the interlocking protrusion 56 is guided to the recessed portion of the interlocking portion 52 in the seat stopper 37, the elastic member 71 elastically pushes the interlocking protrusion 56 toward the interlocking portion 52. Thus, without pressing the lock release button 51, when users folds the seat 31 to the vertical orientation, the interlocking protrusion 56 can be guided to the interlocking portion 52 so that the seat 31 can be held in the folded orientation. However, the interlocking protrusion does not necessarily have the inclined surface. Users can press the lock release button to retract the interlocking protrusion, and can fold the seat to the vertical orientation. Each elastically protruding portion 53 has a coupling shaft 59 on a coupling side coupled to the linkage mechanism 54. The coupling shaft 59 protrudes toward the lower surface of the seat 31.

The linkage mechanism 54 is coupled to the lower surface of the seat 31 to be moved away from the support pipes 5 when the lock release button 51 is pressed. The linkage mechanism 54 is coupled to the lower surface of the seat 31 to be reciprocately moved away from and toward the support pipes 5. A first end 54A of the linkage mechanism 54 shown in Figs. 14 and 16 is coupled to the lock release button 51, and a second end 54B of the linkage mechanism 54 is coupled to the coupling shafts 59 of the elastically protruding portions 53. The linkage mechanism 54 has a guide gap 60 that extends from the second end 54B to a middle part of the linkage mechanism 54. A guide rib 44 is formed integrally with the lower surface of the seat 31 to guide the guide gap 60. The inside width of the guide gap 60 is larger than the thickness of the guide rib 44. Thus, the linkage mechanism 54 is coupled to the seat 31 to reciprocately move along the guide rib 44.

As shown in Fig. 17, the second end 54B of the linkage mechanism 54 is arranged between each of the elastically protruding portions 53 and the seat 31. The elastically protruding portions 53 prevent that the second end 54B is detached from the seat 31. A cover 65 is secured to the seat 31 to prevent that the first end 54A is detached from the seat 31. Slide ribs 65A are formed integrally with the cover 65 to protrude from the inside surface of the cover 65. The cover 65 is secured at four corners to the seat 31 by the screws 72. The seat 31 has threaded screw bosses 45 that protrude from the inside surface of the seat 31. The screws 72 are screwed into the screw bosses 45. The lower surface of the linkage mechanism 54 is in slidable contact with the slide ribs 65A of the cover 65 that is secured to the seat 31. Thus, the linkage mechanism 54 is reciprocately movably coupled to the seat 31. The slits 38 are defined between the cover 65 and the lower surface of the seat 31. The horizontal portion 33A of the first link 33 reciprocately moves along the slits 38. The width of the slit 38 is slightly larger than the outer diameter of the horizontal portion 33A of the first link 33. Thus, the horizontal portion 33A smoothly and reciprocately moves. The seat 31 has slide ribs 46 that are arranged beside the both sides of the guide rib 44 in parallel to the guide rib 44, and protrude from the lower surface of the seat 31. According to the thus-configured seat 31 and cover 65, the horizontal portion 33A of the first link 33 can smoothly reciprocately move in the slits 38 along the end surfaces of the guide ribs 44 and the slide rib 46 that protrude from the lower surface of the seat 31, and the end surfaces of the slide ribs 65A that protrude from the inside surface of the cover 65.

The linkage mechanism 54 has a pair of inclined slits 61 in the second end 54B. The coupling shafts 59 of the elastically protruding portions 53 are inserted in the inclined slits 61. The inclined slits 61 are symmetric with respect to a line. As shown in Figs. 14 and 16, the interval between the coupling shafts 59 in the pair of inclined slits 61 is getting narrower when the lock release button 51 is pressed to pull the linkage mechanism 54. When the linkage mechanism 54 is pulled by the lock release button 51, the coupling shafts 59 are moved along the inclined slits 61 toward each other so that the interlocking protrusions 56 are retracted inward of the peripheral wall 35 of the seat 31. Thus, the interlocking protrusions 56 are disengaged from the recessed portions as the interlocking portion 52.

The linkage mechanism 54 has a coupling hole 62 in the first end 54A. The lock release button 51 engages with the coupling hole 62. The lock release button 51 has three inclined ribs 63 that protrude from the lower surface of the lock release button 51 and are inserted in the coupling hole 62. In the lock release button 51 shown in Figs. 14 and 16, the three inclined ribs 63 are arranged in parallel to each other, and are spaced at an interval from each other. The three inclined ribs 63 are inserted in the coupling hole 62 to reciprocately move the linkage mechanism 54. The inclined rib 63 has an inclined edge on a side opposite to the support pipes 5 of the seat. Thus, when the lock release button 51 is pressed, the inclined ribs 63 slide on an interior surface of the coupling hole 62 so that the linkage mechanism 54 is pulled to compress the elastic members 71. When the lock release button 51 is pressed, the inclined edges of the inclined ribs 63 slide on the outside interior surface as a slider surface of the coupling hole 62 so that the linkage mechanism 54 is pulled toward the free-end side of the seat 31. When the lock release button 51 is not pressed, the linkage mechanism 54 is pulled toward the coupling part 40 of the seat 31 by the elastic members 71 via the elastically protruding portions 53 so that the slide edge of the coupling hole 62 of the linkage mechanism 54 slides along the inclined edges of the inclined ribs 63. Thus, the lock release button 51 is elastically biased upward. Accordingly, in the locking mechanism 50, the lock release button 51 can be elastically biased toward a rest position by the elastic members 71 that are coupled to the elastically protruding portions 53. Although not illustrated, the locking mechanism may be elastically biased upward by an elastic member.

The seat 31 shown in Fig. 4 has a operation recessed portion 47 in a middle part of the seat 31 on the coupling part 40 side coupled to the support pipe 5. When folding the seat 31 from horizontal orientation to the vertical orientation as shown in Fig. 9, users can insert their fingers into the operation recessed portion 47, and can easily move the vertical slider 36 upward. The illustrated seat 31 has a seat cover 73 that is detachably attached onto the upper surface of the seat 31. The seat cover 73 is a cushion member such as soft plastic and urethane. In the case where the seat 31 has the seat cover 73 on its upper surface, users can comfortably sit on the seat 31.

The thus-configure foldable chair 30 is folded/unfolded as follows:

### [Folded Seat]

As shown in Fig. 3, the vertical slider 36 is located at a top position. The seat 31 and the foldable legs 32 are folded in parallel to the support pipes 5. The foldable legs 32 are accommodated in the first recessed portions 35A of the seat 31. The second links 34 are accommodated in the wide recessed portion 35B of the seat 31. The first link 33 is orientated in parallel to the support pipes 5. Thus, the foldable chair 30 is held folded. When users wheel the bag on the casters 6, or when users do not use the foldable chair 30, the foldable chair 30 is held folded and is orientated in parallel to the support pipes 5.

### [Unfolding Seat for Use as Chair]

Users press the lock release button 51 to bring the locking mechanism 50 to disengagement. When the lock release button 51 is pressed, as shown in Fig. 16, the inclined edges of the inclined ribs 63 slide on the interior surface as a slider surface on the outside of the coupling hole 62 so that the linkage mechanism 54 is pulled toward the free-end side of the seat 31. When the linkage mechanism 54 is pulled toward the free-end side of the seat 31, the coupling shafts 59 move in the inclined slits 61 so that the pair of elastically protruding portions 53 move toward each other. When the protruding portions 53 move toward each other, the interlocking protrusion 56 retract into the inside of the peripheral wall 35 of the seat 31, and disengage from the interlocking portions 52.

When users pressing the lock release button 51 to bring the locking mechanism 50 to disengagement, as shown by the arrow A in Fig. 7, the seat 31 swings from the vertical orientation to the horizontal orientation. As shown by the arrow B in Fig. 7, the vertical slider 36 is moved downward until contact between the vertical slider 36 and the seat stopper 37 stops the downward movement of the vertical slider 36. When the seat 31 swings toward the horizontal orientation, as shown by the arrow C in Fig. 7, the foldable legs 32 swing. The second links 34 will restrict the inclination angle of the foldable legs 32. When the foldable legs 32 swing, the second links 34 swing away from the support pipes 5. When the second links 34 swing away from the support pipes 5, if the first link 33 is orientated in parallel to the support pipes 5, the elastic rods 39 will elastically deform. The elastic rods 39 apply an elastic force to the first link 33 so that the first link swings in a direction shown by the arrow D in Fig. 7. Thus, the horizontal portion 33A of the first link 33 as a coupling part between the first link 33 and seat 31 is moved along the lower surface of the seat 31 away from the support pipes 5. When the horizontal portion 33A of the first link 33 is moved away from the support pipes 5, the deformation of the elastic rod 39 will decrease. Thus, as shown in Figs. 4 through 6, the seat 31 is supported in the horizontal or substantially horizontal orientation by the first link 33 and the foldable legs 32.

### [Folding Seat]

Users insert their fingers into the operation recessed portion 47 on the coupling part 40 side of the seat 31, and move the coupling part 40 of the seat 31 upward as shown by the arrow A in Fig. 9. The vertical slider 36 as the coupling part 40 of the seat 31 is moved upward along the support pipes 5 so that the seat 31 swings from the horizontal orientation to the vertical orientation. When the seat 31 swings to the vertical orientation, as shown by the arrow B in Fig. 9, the foldable legs 32 also swing. Thus, the second links 34 swing in a direction in that the upper ends of the second links 34 move toward the support pipes 5. When the second links 34 swing toward the support pipes 5, if the first link 33 is inclined to support the seat 31, the elastic rods 39 will elastically deform. The elastic rods 39 apply an elastic force to the first link 33 so that the first link swings in a direction shown by the arrow C in Fig. 9. Thus, the horizontal portion 33A of the first link 33 is moved along the lower surface of the seat 31 toward the support pipes 5. When the horizontal portion 33A of the first link 33 is moved toward the support pipes 5, the deformation of the elastic rod 39 will decrease. Thus, as shown in Fig. 3, the seat 31 is folded toward the vertical orientation so that the foldable legs 32, the first link 33 and the second links 34 are accommodated between the support pipes 5. Also, the interlocking portions 52 as the recessed portions of the seat stoppers 37 interlock with the interlocking protrusions 56 of the elastically protruding portions 53 that protrude from the both sides of the seat 31 so that the locking mechanism 50 holds the seat 31 in the vertical orientation.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims. The present application is based on Application No. 2008-153592 filed in Japan on June 11, 2008, the content of which is incorporated herein by reference.

**Numeral references of the figures**

| | | | |
|---|---|---|---|
| 1 | Horizontal base | | |
| 3 | Bag unit | 3A | Attachment band |
| | | 3B | Attachment Hanger |
| 4 | Grip | | |
| 5 | Support pipe | 5A | Sliding rod |
| | | 5B | Guide tube |
| 6 | Caster | | |
| 7 | Vertical opening | | |
| 8 | Reinforcement wall | 8A | Reinforcing rib |
| 9 | Protruding portion | | |
| 10 | Back wall | | |
| 11 | Coupling rod | | |
| 12 | Attachment aperture | | |
| 13 | Attachment hook | | |
| 14 | Insertion space | | |
| 15 | Stopper | | |
| 16 | Protrusion pin | 16A | Protruding portion |
| 17 | Receiving portion | | |
| 18 | Disengaging mechanism | | |
| 19 | Elastic member | | |
| 20 | Push button | | |
| 21 | Push rod | 21A | Horizontal rod portion |
| | | 21B | Vertical rod portion |
| 22 | Pivot member | 22A | Pin |
| 23 | Elastic member | | |
| 24 | Insertion cap | | |
| 25 | Guide cap | | |
| 26 | Fit-in cylindrical portion | 26A | Insertion hole |
| 27 | Pivot shaft | | |
| 28 | Reinforcing rib | | |
| 29 | Through hole | | |
| 30 | Foldable chair | | |
| 31 | Seat | 31A | Recessed portion |
| 32 | Foldable leg | | |
| 33 | First link | 33A | Horizontal portion |
| | | 33B | Coupling point |
| 34 | Second link | | |
| 35 | Peripheral wall | 35A | First recessed portion |
| | | 35B | Wide recessed portion |
| | | 35a | Through hole |
| 36 | Vertical slider | 36A | Through hole |
| 37 | Seat stopper | | |
| 38 | Slit | | |
| 39 | Elastic rod | 39A | Tube portion |
| 40 | Coupling part | | |
| 41 | Guide groove | | |
| 42 | Boss | | |
| 43 | Rib | | |
| 44 | Guide rib | | |
| 45 | Screw rod | | |
| 46 | Screw Boss | | |
| 47 | Slide rib | | |
| 48 | Operation recessed portion | | |
| 49 | Swing shaft | | |
| 50 | Locking mechanism | | |
| 51 | Lock release button | | |
| 52 | Interlocking portion | | |
| 53 | Elastically protruding portion | | |
| 54 | Linkage mechanism | 54A | First end |
| | | 54B | Second end |
| 55 | Rib | | |
| 56 | Interlocking protrusion | 56A | Inclined surface |
| 57 | Slit | | |
| 58 | Rib | | |
| 59 | Coupling shaft | | |
| 60 | Guide gap | | |
| 61 | Inclined slit | | |
| 62 | Coupling hole | | |
| 63 | Inclined rib | | |
| 65 | Cover | 65A | Slide rib |
| 70 | Slot | | |
| 71 | Elastic member | | |
| 72 | Screw | | |
| 73 | Seat cover | | |
| 90 | Chair | | |
| 91 | Seat | | |
| 92 | Foldable leg | | |
| 95 | Support pipe | | |

## Claims

1. A foldable-chair-equipped bag comprising:
a bag unit (3);
a horizontal base (1) that supports the bag unit (3) on the upper surface thereof;
casters (6) that are secured to the lower surface of the horizontal base
(1) to allow the bag to be wheeled;
a pair of support pipes (5) that are coupled at the lower end thereof to the horizontal base (1);
a seat (31) that is foldable from the horizontal orientation to the vertical orientation, and is coupled to the support pipes (5) movably in the vertical direction;
a seat stopper (37) that restricts the downward movement of the seat (31);
foldable legs (32) that are swingably coupled at the upper end thereof to said seat (31);
a first link (33) that is coupled at one end thereof to a middle part of the foldable leg (32) and at another end thereof to the lower surface of the seat (31) so that said another end can be moved toward and away from the support pipes (5); and
a second link (34) that is swingably coupled at one end thereof to the middle part of the foldable leg (32) and at another end to the horizontal base (1) or the lower end part of the support pipe (5) to restrict the inclination angle of the foldable legs (32), wherein
when a coupling part (40) between said seat (31) and the support pipes (5) is moved upward, the seat (31), the foldable legs (32), the first link (33) and the second link (34) are folded in parallel to the support pipes (5), wherein when the coupling part (40) between said seat (31) and the support pipes (5) is moved downward, and the seat (31) is unfolded toward the horizontal orientation, said seat stopper (37) stops the downward movement of the coupling part (40) coupled to the support pipes (5), and the foldable legs (32) are unfolded so that said another end of the first link (33) is moved away from the support pipes (5), and when the second link (34) restricts the inclination angle of the foldable legs (32), the seat (31) is held in the horizontal orientation by the first link (33) and the foldable legs (32),
**characterized in that**
said first link (33) and said second link (34) are coupled by an elastic rod (39) that does not provide an elastic force when the seat is folded, whereas the elastic force of the elastic rod (39) moves said another end of the first link (33) along the seat (31) when the second link (34) swings with respect to the support pipes (5).

2. The foldable-chair-equipped bag according to claim 1 further comprising a locking mechanism (50) that holds said seat (31) in the vertical orientation, wherein the locking mechanism (50) includes a lock release button (51) that is located on a free-end side of the seat (31) and releases the holding of the seat (31) so that the seat (31) swings from the vertical orientation to the horizontal orientation.

3. The foldable-chair-equipped bag according to claim 2, wherein said locking mechanism (50) includes
an interlocking portion (52) that is arranged on the support pipe (5),
an elastically protruding portion (53) that is coupled to the lower surface of said seat (31) and elastically protrudes toward an interlocking position to interlock with said interlocking portion (52), and
a linkage mechanism (54) that couples the elastically protruding portion (53) to the lock release button (51) so that the elastically protruding portion (53) can be retracted from the interlocking position to an interlocking release position.

4. The foldable-chair-equipped bag according to claim 3, wherein said lock release button (51) is located on an edge of the seat (31) opposite to the coupling part (40) that couples the seat (31) to the support pipes (5).

5. The foldable-chair-equipped bag according to claim 3, wherein said lock release button (51) is biased by the linkage mechanism (54) to elastically protrude toward the surface of the seat (31).

6. The foldable-chair-equipped bag according to claim 3, wherein the interlocking portion (52) of said locking mechanism is arranged in said seat stopper (37).

7. The foldable-chair-equipped bag according to claim 6, wherein a pair of seat stoppers (37) are provided as the seat stopper, and a pair of elastically protruding portions (53) are provided as the elastically protruding portion, wherein recessed portions (52) are formed as the interlocking portion on insides of the seat stoppers (37) that are opposed to each other, and accommodate said elastically protruding portions (53), wherein the recessed portions (52) as the interlocking portion accommodate the elastically protruding portions (53) so that the seat (31) is held in the vertical orientation.

8. The foldable-chair-equipped bag according to any of claims 3 to 7, wherein a pair of elastically protruding portions (53) are provided as the elastically protruding portion to protrude from the both sides of said seat (31).

9. The foldable-chair-equipped bag according to any of claims 3 to 8, wherein said elastically protruding portion (53) has an interlocking protrusion (56) on an end thereof to be inserted into the interlocking portion (52), and said seat (31) has a through hole (35a) that allows the interlocking protrusion (56) to protrude from the through hole (35a).

10. The foldable-chair-equipped bag according to any of claims 3 to 9, wherein said elastically protruding portion (53) is coupled to the back surface of the seat (31) to be able to move reciprocately.

11. The foldable-chair-equipped bag according to any of claims 1 to 10, wherein a vertical slider (36) is coupled to said support pipes (5) slidably in the vertical direction, and the seat (31) and the foldable legs (32) are foldably coupled to the vertical slider (36).

12. The foldable-chair-equipped bag according to any of claims 1 to 11, wherein said one end of said first link (33) is coupled to an upper point of the foldable leg (32) relative to said one end of said second link (34) that is coupled to the foldable leg (32).

13. The foldable-chair-equipped bag according to any of claims 1 to 12, wherein said seat (31) has a peripheral wall (35) that stands from the lower surface along a free-side edge of the seat (31), wherein the peripheral wall (35) has first recessed portions (35A) that accommodate the foldable legs (32) when the seat is folded, and a wide recessed portion (35B) that accommodates the second link (34) when the seat is folded.

14. The foldable-chair-equipped bag according to any of claims 1 to 13, wherein said foldable legs 32 support the seat (31) in the horizontal orientation when unfolded.

15. The foldable-chair-equipped bag according to any of claims 1 to 14, wherein said elastic rod (39) is formed of hard plastic that can elastically deform.
